# EUROPÄISCHE PATENTSCHRIFT

(11) **EP 3 604 715 B1**
(45) Veröffentlichungstag und Bekanntmachung des Hinweises auf die Patenterteilung: **29.09.2021**
(21) Anmeldenummer: 19189869.1
(22) Anmeldetag: 02.08.2019
(51) Int. Cl.: E04H 12/34, F03D 13/20, F15D 1/10

(54) **STRANG FÜR EINE SCRUTON-SPIRALE, VERFAHREN ZUM MONTIEREN EINER SCRUTON-SPIRALE SOWIE VERFAHREN ZUM ERRICHTEN EINER WINDENERGIEANLAGE**
STRAKE FOR SCRUTON HELIX, METHOD FOR ASSEMBLING A SCRUTON HELIX AND METHOD FOR ERECTING A WIND POWER PLANT
FILET POUR UNE HÉLICE SCRUTON, PROCÉDÉ DE MONTAGE D'UNE HÉLICE SCRUTON AINSI QUE PROCÉDÉ DE CONSTRUCTION D'UNE ÉOLIENNE

(30) Priorität: 03.08.2018 DE 102018118965
(43) Veröffentlichungstag der Anmeldung: 05.02.2020
(73) Patentinhaber: Nordex Energy SE & Co. KG, 22419 Hamburg (DE)
(72) Erfinder: Jensen, Christin, 24991 Großsolt (DE); Fingerhut, Stephan, 22851 Norderstedt (DE); Hartung, Bastian, 22305 Hamburg (DE)
(74) Vertreter: Hauck Patentanwaltspartnerschaft mbB

(56) Entgegenhaltungen:
- EP-A1- 3 029 313
- WO-A1-2018/083054
- CN-U- 205 744 309
- US-B1- 9 803 431

## Beschreibung

Die Erfindung betrifft einen Strang für eine Scruton-Spirale zur Verwendung an einem Turm für eine Windenergieanlage. Die Erfindung betrifft weiterhin ein Verfahren zum Montieren einer Scruton-Spirale an einer Turmsektion und ein Verfahren zum Errichten einer Windenergieanlage.

Aus der Strömungsmechanik ist ein als Kärmänsche Wirbelstraße bezeichnetes Phänomen bekannt, bei dem sich hinter einem umströmten Körper gegenläufige Wirbel ausbilden. Wenn die Ablösefrequenz der Wirbel der Eigenfrequenz des umströmten Körpers entspricht, so wird er zu Schwingungen quer zur Strömungsrichtung angeregt. Solche wirbelerregten Querschwingungen treten auch an Türmen von Windenergieanlagen auf und sind dort unerwünscht, weil sie zu hohen dynamischen Belastungen und einer Verkürzung der Lebensdauer führen. Die Ablösefrequenz der Wirbel hängt unter anderem von der Anströmgeschwindigkeit und vom Durchmesser des Turms ab.

Die Türme moderner Windenergieanlagen sind oft als im wesentlichen zylindrische Stahlrohrtürme, teilweise mit konisch verlaufenden Abschnitten, oder als Hybridtürme mit einem Betonsockel und darauf aufgesetztem, wieder im wesentlichen zylindrischem Stahlrohrabschnitt ausgebildet. Ein Stahlrohrturm oder der Stahlrohrabschnitt eines Hybridturms wird meist in Längsrichtung in Abschnitte unterteilt, die fachsprachlich als Turmsektion oder manchmal als Turmsegment bezeichnet werden. Dies vereinfacht die Logistik, indem die Turmsektionen in einem Werk hergestellt und zum vorgesehenen Standort der Windenergieanlage transportiert werden. An dem vorgesehenen Standort werden diese Turmsektionen mit Hilfe von Kränen aufeinandergesetzt und über ringförmige Flansche an den Enden miteinander verbunden, bis die gewünschte Höhe erreicht ist. Auf den so errichteten Turm wird nachfolgend die Gondel aufgesetzt und mit diesem verbunden und anschließend an der Gondel der Rotor angebracht.

Im Betrieb der Windenergieanlage wird durch den sich drehenden Rotor das Entstehen einer Kärmänschen Wirbelstraße verhindert. Während der Errichtung jedoch ist dies nicht der Fall, vielmehr ist der (teil-) errichtete Turm diesem Phänomen sozusagen wehrlos ausgesetzt. Ein wirksames Mittel, um das Entstehen einer Kärmänschen Wirbelstraße zu vermeiden, ist eine spiralförmig um den zylindrischen Körper, also den Turm, verlaufende stegartige, eine Kante bildende Konstruktion, die nach ihrem Erfinder als Scruton-Spirale oder Scruton-Wendel bekannt ist. An der Kante der Scruton-Spirale bricht die Strömung und wird in verschiedene Richtungen abgelenkt, so dass entstehende Wirbel unregelmäßiger und kleiner sind und sich keine Wirbelstraße mehr aufbauen kann. Die spiralförmig verlaufenden Elemente der Scruton-Spirale werden oft mit dem englischen Wort "Strake" bezeichnet, nachfolgend wird auch das Wort "Strang" verwendet.

Aus der GB 907,851 bzw. der DE-OS 1409401 ist das Grundprinzip der Scruton-Spirale bekannt.

Aus der DE 28 04 711 A1 ist eine Windkraftmaschine mit einer starren Turmkonstruktion bekannt, die an dem Turm in einer schraubenförmigen Bahn angebrachte, streifenförmige Platten aufweist, deren freie Enden sich von dem Turm erstrecken.

Aus der DE 10 2010 009 435 A1 ist eine Windkraftanlage bekannt, die eine den Turm umlaufende Spirale in Form einer Erhöhung oder Ausnehmung oder einer Kombination aus Erhöhung und Ausnehmung aufweist.

Aus der EP 1 881 195 A1 ist eine Vorrichtung zum Verhindern von Wirbeln bekannt, die sich spiralförmig um den Turm erstreckt und aus drei gewellten Schläuchen besteht, die mit Hilfe von Seilen gehalten und geführt werden.

Aus der EP 2 851 490 A1 ist ein Verfahren zum Transportieren eines Turms einer Windturbine in aufrechter Position bekannt, wobei der Turm mit einer Anzahl abnehmbarer Strakes ausgerüstet ist. Weiterhin sind aus dieser Veröffentlichung ein Strakessatz, ein mit dem Strakessatz ausgerüsteter Turm und eine Transportbaugruppe mit dem Strakessatz bekannt. In dieser Veröffentlichung und der US 2016/0312761 A1 ist beschrieben, dass ein Strake ein Seil umfasst, das mit einer Abdeckkonstruktion bedeckt ist.

Aus der EP 3 029 313 A1 ist ein Strake für einen Windturbinenturm bekannt, der zum Reduzieren von wirbelerregten Schwingungen an einem Windenergieanlagenturm angebracht werden kann und der eine aufblasbare Außenkonstruktion mit einer dreieckigen Form aufweist.

Aus der WO 2018/083054 A1 ist eine Scruton-Spirale mit den Merkmalen des Oberbegriffs des Anspruchs 1 bekannt geworden. Die spiralförmig umlaufenden Stränge der bekannten Scruton-Spirale sind zwischen zwei Lagen einer Schrumpffolie angeordnet. Die Schrumpffolie umgibt den Turmabschnitt schlauchförmig.

Der Erfindung liegt die Aufgabe zugrunde, eine während der Errichtung der Windenergieanlage verwendbare Scruton-Spirale bereitzustellen, mittels derer wirbelerregte Querschwingungen des Turms der Windenergieanlage reduziert werden können. Eine weitere Aufgabe der Erfindung ist es, ein Verfahren zum Montieren einer Scruton-Spirale an einer Turmsektion eines Turms für eine Windenergieanlage anzugeben. Es ist eine weitere Aufgabe der Erfindung, ein Verfahren zum Errichten einer Windenergieanlage anzugeben.

Die Aufgabe wird gelöst durch einen Strang für eine Scruton-Spirale mit den Merkmalen des Anspruchs 1. Die Scruton-Spirale ist zur Verwendung an einem Turm für eine Windenergieanlage vorgesehen und kann als mehrteiliger Bausatz bereitgestellt werden. Der Strang für die Scruton-Spirale weist eine Unterkonstruktion auf, die über eine Oberfläche einer Turmsektion des Turms spannbar ist und eine Auflageseite mit einer Auflagefläche und eine der Auflageseite gegenüberliegende Außenseite hat. Mit der Auflagefläche liegt die montierte Unterkonstruktion auf der Oberfläche der Turmsektion auf. Die Auflagefläche der Unterkonstruktion kann rutschhemmend ausgebildet sein. Die Unterkonstruktion kann eine geeignete Textilbahn aufweisen, beispielsweise eine LKW-Plane, oder aus einer solchen hergestellt sein. Weiterhin weist der Strang wenigstens einen Störkörper zum Beeinflussen einer Windströmung an dem Turm oder der Turmsektion auf. Der Störkörper ist mit der Außenseite der Unterkonstruktion in Kontakt bringbar und mit der Unterkonstruktion verbindbar, insbesondere mittels einer Klettverbindung. Durch die Aufteilung in eine Unterkonstruktion und die aerodynamisch wirksamen Störkörper wird der Strang der Scruton-Spirale wesentlich besser handhabbar, besonders dann, wenn die Montage im Freien bei Wind erfolgt, und die Einzelteile sind leicht transportierbar.

Bevorzugt umfasst die Unterkonstruktion ein Spannmittel, mit dem die Unterkonstruktion entlang ihrer Längsrichtung auf Zug beanspruchbar ist, um die Auflagefläche gegen die Oberfläche der Turmsektion zu pressen. Als Spannmittel werden vorzugsweise ein oder mehrere parallel verlaufende Gurte und/oder Seile verwendet. Durch das Spannen wird ein fester und sicherer Sitz der Unterkonstruktion und damit des montierten Stranges der Scruton-Spirale auf der Oberfläche der Turmsektion gewährleistet.

Bevorzugt weist die Unterkonstruktion an mindestens einem Ende eine quer zu einer Längsrichtung der Unterkonstruktion angeordnete Traverse auf, an der das Spannmittel befestigt ist, wobei die Traverse eine Befestigungseinrichtung zur Befestigung eines Spannelements aufweist. Die Traverse kann sich über die gesamte Breite der Unterkonstruktion bzw. des Spannmittels erstrecken. Das Spannmittel kann an mehreren, voneinander beabstandeten Punkten oder über seine gesamte Breite an der Traverse befestigt sein. Die Befestigungseinrichtung kann zum Beispiel eine Öse oder eine Bohrung aufweisen, an der das Spannelement zum Beispiel mit einem Schäkel angeschlagen wird. Die Befestigungseinrichtung kann sich insbesondere etwa in der Mitte der Traverse befinden. Die Traverse ist ein hinreichend steifer Träger, beispielsweise aus Metall, zum Beispiel in Form eines Profils oder einer Platte. Sie ermöglicht eine gleichmäßige Einleitung einer Zugspannung in das Spannmittel, wodurch ein optimales Anliegen der Auflagefläche der Unterkonstruktion an der Oberfläche der Turmsektion erreicht wird.

Bevorzugt weist das Spannmittel zwei Gurte oder zwei Seile auf, die in einem vorgegebenen Abstand voneinander an der Traverse befestigt sind. Dadurch legt die Traverse den gewünschten Abstand zwischen den Gurten oder Seilen fest und verhindert insbesondere, dass die Gurte oder Seile beim Spannen zusammengezogen werden. Dadurch wird eine sichere Fixierung der Unterkonstruktion an der Oberfläche der Turmsektion mit einem parallelen Verlauf der Gurte oder Seile vereinfacht.

Bevorzugt weist der Störkörper zumindest zwei Wände auf, die sich entlang einer Längsrichtung des Störkörpers erstrecken. Die die beiden Wände verbindende Kante definiert eine Längsrichtung des Störkörpers. Mit dem Störkörper und an dieser Kante wird die Luftströmung des Windes derart beeinflusst, dass sich keine Wirbelstraße mehr ausbilden kann. Der Störkörper ist so mit der Unterkonstruktion verbindbar, dass seine Längsrichtung im wesentlichen parallel zu einer Längsrichtung der Unterkonstruktion ist. Vorzugsweise ist kann der Störkörper so groß sein, dass sich eine Höhe der Scruton-Spirale von wenigstens dem 0,05-fachen, insbesondere wenigstens dem 0,1-fachen des Durchmessers der Turmsektion ergibt. Der Störkörper kann aus einer geeigneten Textilbahn, beispielsweise LKW-Plane, hergestellt sein, die mit Versteifungen ausgestattet sein kann, um die Stabilität des Störkörpers zu sichern. So kann der Störkörper flach liegend bereitgestellt und vor der Montage auf der Unterkonstruktion einfach in die gewünschte Form gefaltet werden.

Bevorzugt weist der Strang für eine Scruton-Spirale eine Mehrzahl von Störkörpern auf, die zum Anordnen in Reihe entlang der Längsrichtung des Strangs ausgebildet und miteinander verbindbar sind, insbesondere mittels Klettverbindungen. Um die notwendige Länge zu erreichen, können beispielsweise zwischen 20 und 50 Störkörper hintereinander angebracht werden. Durch das Verbinden der Störkörper miteinander entsteht eine geschlossene, aerodynamisch wirksame Kante der Scruton-Spirale. Eine Vielzahl kurzer Störkörper ist wesentlich leichter handhabbar als ein einzelner Störkörper, der so lang wie der Strang der Scruton-Spirale wäre. Um Toleranzen bei der Montage auszugleichen, können Störkörper mit zwei oder mehr unterschiedlichen Längen bereitgestellt werden, beispielsweise mit Längen von 50 cm und 25 cm. Durch geeignete Kombination der Störkörper kann annähernd die gesamte Länge der Unterkonstruktion (oder ein gewünschter Längsabschnitt davon) mit Störkörpern versehen werden. Insbesondere kann bei der Befestigung der Störkörper an der Unterkonstruktion etwa in der Mitte der Unterkonstruktion begonnen und zu den Enden der Unterkonstruktion hin gearbeitet werden. Dann können an beiden Enden Störkörper mit der am besten geeigneten Länge ausgewählt werden.

Bevorzugt weist ein Störkörper einen Deckel auf, mit dem ein Ende des Störkörpers verschließbar ist. Der Deckel schützt das Innere des Störkörpers vor dem Eindringen größerer Wassermengen, vor Verschmutzungen oder Vögeln. Er kann zum Beispiel aus dem gleichen Material bestehen wie die Wände des Störkörpers. Er kann lösbar an dem Störkörper befestigt sein, zum Beispiel mit Klettverbindungen. Der Deckel kann eine dreieckige Grundform aufweisen mit an den drei Seiten des Dreiecks angeordneten, abwinkelbaren Befestigungslaschen, an denen jeweils ein Klettverbinder (Haken oder Flausch) befestigt ist.

Die Aufgabe wird auch gelöst durch ein Verfahren zum Montieren einer Scruton-Spirale an einer Turmsektion für einen Turm für eine Windenergieanlage mit den Merkmalen des Anspruchs 8. Das Verfahren kann insbesondere mit einem Strang nach einem der Ansprüche 1 bis 7 ausgeführt werden. Alle vorstehend im Zusammenhang mit dem Strang beschriebenen Merkmale können daher bei dem Verfahren genutzt werden. Das Verfahren weist die folgenden Schritte auf, die in der angegebenen Reihenfolge ausgeführt werden können:
- Bereitstellen einer Turmsektion,
- spiralförmiges Umwickeln der Turmsektion mit wenigstens einer Unterkonstruktion für einen Strang einer Scruton-Spirale,
- Befestigen der Unterkonstruktion an der Turmsektion durch Einbringen einer Zugspannung in die Unterkonstruktion,
- Befestigen von wenigstens einem Störkörper für die Scruton-Spirale an der Unterkonstruktion.

Nach dem Ausführen des Verfahrens ist der Strang sicher an der Turmsektion befestigt. Dies gelingt bei der Erfindung besonders einfach, weil die Unterkonstruktion an der Turmsektion angeordnet und durch Einbringen einer Zugspannung an der Turmsektion befestigt wird, bevor dies durch auf die Störkörper einwirkende Gewichts- und Windkräfte erschwert wird. Die Unterkonstruktion kann ein flexibles, streifenförmiges Band sein, das insbesondere ein textiles Material aufweist. Durch die Zugspannung zieht sich die Unterkonstruktion um die Turmsektion zusammen, so dass sie mit einer Auflagefläche an der Oberfläche der Turmsektion anliegt. Die Unterkonstruktion ist in ihrer Längsrichtung, die nach dem Umwickeln der Turmsektion der gewünschten Spiralform folgt, auf Zug hinreichend belastbar, um eine sichere Befestigung an der Turmsektion durch das Einbringen der Zugspannung zu erzielen.

Die Turmsektion kann zur Montage der Scruton-Spirale horizontal gelagert werden, beispielsweise auf Lagerböcken oder Lagerschalen, so dass sie entlang ihrer gesamten Länge verhältnismäßig leicht von außen zugänglich ist, beispielsweise mit Hilfe eines Hubsteigers. Vorteilhaft ist auch eine nachfolgend noch erläuterte, drehbare Lagerung der Turmsektion auf Rollböcken.

Die Unterkonstruktion kann auf einer Seite eine rutschhemmende Beschichtung haben, die auf der Außenseite der Turmwand aufliegt. Auf der anderen Seite der Unterkonstruktion können Klettbänder angebracht sein; damit kann das Befestigen des Störkörpers mittels einer Klettverbindung erfolgen. Die Unterkonstruktion kann einen, zwei oder mehr in Längsrichtung durch die Unterkonstruktion verlaufende Gurte oder andere Zugmittel aufweisen, wobei an den Enden der Gurte jeweils ein Ring oder Ovalglied und/oder eine oben beschriebene Traverse zum Verbinden mit einem Seil vorhanden sein kann. Die Unterkonstruktion kann beim Umwickeln der Turmsektion provisorisch ausgerichtet werden, so dass der Strang etwa gleichmäßig spiralförmig um die Turmsektion verläuft.

Bevorzugt wird beim Spannen der Unterkonstruktion ein vorbestimmter Abstand zwischen je zwei Gängen der Scruton-Spirale eingehalten. Dazu kann beim Spannen sichergestellt werden, dass in Längsrichtung der Turmsektion gemessen ein vorbestimmter Abstand von Kante zu Kante der Unterkonstruktion vorhanden ist. Der Abstand von Kante zu Kante in Längsrichtung der Turmsektion ist einfach zu messen und so ist auf einfache Weise gesichert, dass die Scruton-Spirale eine vorbestimmte Steigung aufweist.

In einer Ausgestaltung weist die Turmsektion eine Turmwand mit einer Durchgangsbohrung auf und zum Einbringen der Zugspannung wird ein Spannelement durch die Durchgangsbohrung hindurchgeführt und gespannt. Das Spannelement kann insbesondere ein Seil sein, das wie erläutert mit der Unterkonstruktion verbunden wird. Es kann jedoch auch ein fester Bestandteil der Unterkonstruktion als Spannelement dienen, beispielsweise ein an einem Ende hervorstehender Gurt- oder Seilabschnitt. Die Verwendung einer Durchgangsbohrung in der Turmwand ist von besonderem Vorteil, weil die Anordnung der Durchgangsbohrung eine gewünschte Position für das betreffende Ende des Strangs weitgehend vorgibt. Anders als beispielsweise bei Verwendung einer an der Außenseite des Turms befestigten Manschette ist ein Verrutschen ausgeschlossen. Zudem kann ein Spannwerkzeug zum Einbringen der Zugspannung im Inneren des Turms angeordnet werden.

Bevorzugt wird weist die Turmsektion eine Turmwand mit einer Mehrzahl von Durchgangsbohrungen zum Hindurchführen von Seilen auf. Ein mit einem ersten Ende der Unterkonstruktion verbundenes erstes Seil wird durch eine Durchgangsbohrung geführt, die sich in der Nähe eines ersten Endes der Turmsektion befindet, ein mit einem zweiten Ende der Unterkonstruktion verbundenes zweites Seil wird durch eine Durchgangsbohrung geführt, die sich in der Nähe eines zweiten Endes der Turmsektion befindet und die Unterkonstruktion wird mittels der Seile gespannt. Die Seile können über die genannten Ringe oder Ovalglieder und/oder Traversen mit den Gurten bzw. Zugmitteln der Unterkonstruktion verbunden sein. Die Seile können mit Hilfe von Kettenzügen oder sonstigen Spannwerkzeugen gespannt werden. Die Unterkonstruktion kann über die beiden Seile an beiden Enden gleichzeitig und gleichmäßig gespannt werden. In den Durchgangsbohrungen in der Turmwand können sich Buchsen befinden, durch die hindurch die Seile geführt werden, so dass die Seile nicht geknickt, sondern mit einem gewissen Radius geführt werden.

Pro Strang der Scruton-Spirale kann eine Durchgangsbohrung an einem ersten Ende der Turmsektion und eine Durchgangsbohrung an einem zweiten Ende der Turmsektion vorgesehen sein; das erste Ende soll dabei jenes sein, das beim späteren Errichten des Turms zum oberen Ende der Turmsektion wird, entsprechend wird das zweite Ende zum unteren Ende der errichteten Turmsektion. Es kann vorgesehen sein, dass beim spiralförmigen Umwickeln der Turmsektion mit der Unterkonstruktion die Enden der Unterkonstruktion bereits in der Nähe der Durchgangsbohrungen zu liegen kommen.

Beim Montieren kann, auch unabhängig von der Verwendung erster und zweiter Seile, ein drittes Seil mit dem ersten Ende des Stranges für die Scruton-Spirale verbunden werden, wobei sich das erste Ende in der Nähe eines nach dem Errichten des Turmes oberen Endes der Turmsektion befindet, und das dritte Seil durch eine weitere Durchgangsbohrung in der Turmwand geführt werden kann. Dieses dritte Seil ist dazu vorgesehen, später, nach der Errichtung der Windenergieanlage, bei der Demontage der Scruton-Spirale den Strang außen am Turm kontrolliert herunterzulassen.

Bevorzugt wird eine Mehrzahl von Störkörpern an der Unterkonstruktion befestigt und miteinander verbunden. Durch die Verwendung vieler kurzer Störkörper, die mittels Klettbändern miteinander verbunden werden können, wird die Montage wesentlich vereinfacht. Es können beispielsweise zwischen 20 und 50 Störkörpern verwendet werden. Durch das Verbinden der Störkörper miteinander entsteht eine geschlossene, aerodynamisch wirksame Kante der Scruton-Spirale. Die an den Enden der Spirale angeordneten Störkörper können jeweils mit einem Deckel verschlossen werden. Die Störkörper können flach liegend bereitgestellt werden und vor dem Befestigen an der Unterkonstruktion in die gewünschte Form gefaltet werden. Das vereinfacht die Logistik im Zusammenhang mit der Bereitstellung und möglichen Wiederverwendung der Scruton-Spirale ganz erheblich.

Bevorzugt weist die Scruton-Spirale mehrere, insbesondere drei Stränge aus Unterkonstruktion und Störkörpern auf. Entsprechend können am ersten, später oberen Ende der Turmsektion in der Turmwand drei Durchgangsbohrungen für die Seile zum Spannen der Unterkonstruktion und weitere drei Durchgangsbohrungen für die Seile zum späteren Herablassen der Stränge vorgesehen sein, die gegeneinander jeweils um 120° versetzt sein können; ebenso können am zweiten, später unteren Ende der Turmsektionen in der Turmwand drei Durchgangsbohrungen für die Seile zum Spannen der Unterkonstruktion, jeweils um 120° versetzt, vorgesehen sein. Die zum Spannen der Unterkonstruktionen verwendeten Spannelemente können jeweils ein Seil aufweisen, das durch eine der Durchgangsbohrungen hindurchgeführt wird, und ein Spannwerkzeug. Die Spannwerkzeuge können insbesondere im Inneren der Turmsektion angeordnet und etwa in der Mitte der Turmsektion miteinander verbunden werden. Dadurch kann eine gleichmäßige Zugspannung in alle drei Stränge der Scruton-Spirale eingebracht werden, insbesondere durch etwa synchrones Spannen der Spannwerkzeuge.

Bevorzugt wird die Turmsektion vor dem spiralförmigen Umwickeln mit der wenigstens einen Unterkonstruktion auf Rollböcken um ihre Längsachse drehbar gelagert. Dabei kann die Turmsektion insbesondere horizontal angeordnet sein. Die Rollböcke weisen Rollen auf, die an einer Außenseite der Turmsektion abrollen. Die Rollen können beispielsweise mit einem Vlies oder anderem polsternden Material umwickelt werden, um dabei eine Beschädigung der Oberfläche der Turmsektion zu vermeiden. Durch die Möglichkeit, die Turmsektion bei der Montage der Unterkonstruktion um ihre Längsachse zu drehen, wird die Befestigung der Unterkonstruktion in der gewünschten Anordnung vereinfacht.

Bevorzugt erfolgt das Befestigen der Unterkonstruktion an der Turmsektion vor dem Transport der Turmsektion zu einem Errichtungsort des Turms und das Befestigen des wenigstens einen Störkörpers an der Unterkonstruktion am Errichtungsort des Turms. Insbesondere kann die Unterkonstruktion bereits bei der Herstellung der Turmsektion/im Werk des Herstellers der Turmsektion befestigt werden. Die zur Montage der Scruton-Spirale auf der Baustelle auszuführenden Arbeiten werden dadurch vereinfacht.

Die Aufgabe wird auch gelöst durch ein Verfahren zum Errichten einer Windenergieanlage mit den Merkmalen des Anspruchs 15. Das Verfahren weist die folgenden Schritte auf:
- Bereitstellen einer Mehrzahl von Turmsektionen,
- Montieren einer Scruton-Spirale an wenigstens einer Turmsektion mit einem Verfahren nach einem der Ansprüche 8 bis 14,
- Errichten des Turmes aus den mehreren Turmsektionen,
- Montieren einer Gondel auf dem Turm und eines Rotors der Windenergieanlage.

Nach dem Errichten des Turms kann sich die Turmsektion mit der montierten Scruton-Spirale in einem Bereich befinden, in dem die größte Auslenkung bei einer Schwingung auftritt. Wenn wirbelerregte Querschwingungen mit der ersten Eigenfrequenz des Turms verhindert werden sollen, kann die Turmsektion mit der Scruton-Spirale also als oberste Turmsektion montiert werden; wenn es um die zweite Eigenfrequenz des Turms geht, etwa auf der halben Höhe des Turms. Es können auch mehrere Turmsektionen mit daran angebrachten Scruton-Spiralen auf unterschiedlichen Höhen montiert werden.

Als weiterer Schritt kann vorgesehen sein:
- Lösen und Herablassen der Scruton-Spirale von dem Turm.

Bereits durch das Aufsetzen der Gondel und das Montieren des Rotors können sich die Eigenfrequenzen so weit verschieben, dass keine Gefahr von wirbelerregten Querschwingungen mehr besteht, so dass bereits dann die Scruton-Spirale demontiert werden kann. Die Windenergieanlage kann aber auch zunächst in Betrieb genommen werden, so dass unerwünschte, wirbelerregte Schwingungen durch die aktive Dämpfung durch den Rotor ausgeschlossen werden, und erst dann kann die Scruton-Spirale demontiert werden.

Die Erfindung wird nachfolgend anhand von Figuren im Detail beschrieben. Es zeigen:
- Fig. 1: einen Abschnitt eines Strangs für eine Scruton-Spirale gemäß der Erfindung,
- Fig. 2: einen Abschnitt einer Unterkonstruktion für den Strang der Scruton-Spirale,
- Fig. 3: einen Störkörper für den Strang der Scruton-Spirale,
- Fig. 4: einen Störkörper für den Strang der Scruton-Spirale aus einer anderen Perspektive,
- Fig. 5: die Montage der Unterkonstruktion des Stranges der Scruton-Spirale in einer schematischen Darstellung,
- Fig. 6: die Demontage eines Stranges der Scruton-Spirale in einer schematischen Darstellung,
- Fig. 7: einen Turm für eine Windenergieanlage mit einer daran montierten Scruton-Spirale und
- Fig. 8: die Montage der Unterkonstruktion des Stranges der Scruton-Spirale in einer Variante mit Traverse in einer schematischen Darstellung.

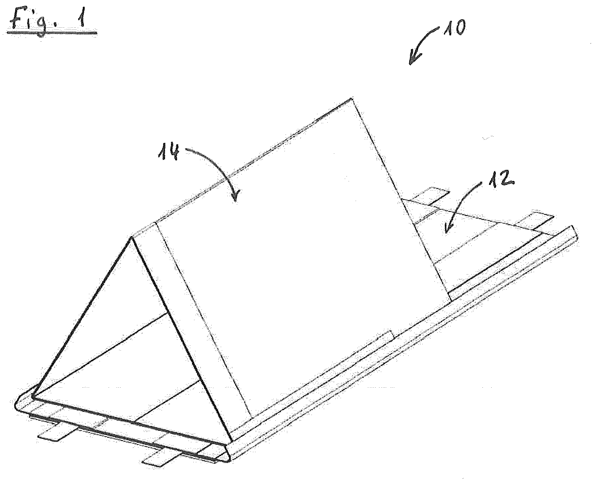

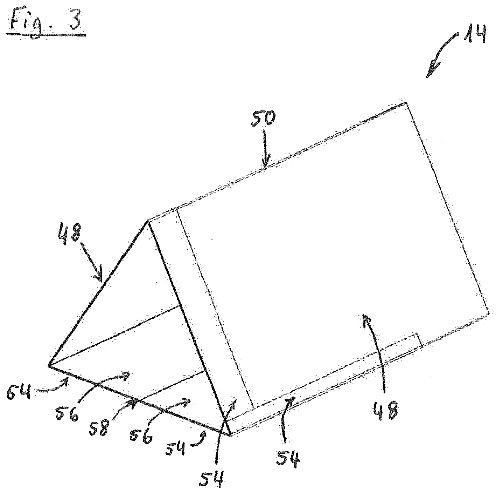

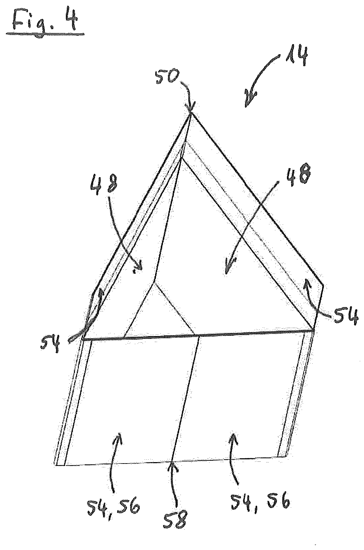

Fig. 1 zeigt einen kurzen Abschnitt eines Strangs 10 für eine Scruton-Spirale nach der Erfindung. Der Strang 10 ist insgesamt wesentlich länger, entsprechend der notwendigen Länge für die Scruton-Spirale, beispielsweise etwa 20 bis 50 Meter. Der Strang 10 besteht aus einer Unterkonstruktion 12 und einer Mehrzahl von Störkörpern 14, von denen zur besseren Übersicht nur einer dargestellt ist. Jeder Störkörper 14 ist beispielsweise nur weniger als einen Meter lang; die Störkörper 14 werden in einer langen Reihe hintereinander auf die Unterkonstruktion 12 aufgesetzt und mit dieser verbunden. Das Verbinden geschieht im Ausführungsbeispiel mittels einer Klettverbindung. Die Unterkonstruktion 12 ist bandförmig und weist eine über ihre Länge im wesentlichen gleichmäßige Breite auf. Diese Breite kann etwa einer Breite der in den Fign. 3 und 4 gezeigten, seitlichen Wände 48 der Störkörper 14 entsprechen, so dass sich als Querschnitt des Strangs 10 ein etwa gleichseitiges Dreieck ergibt.

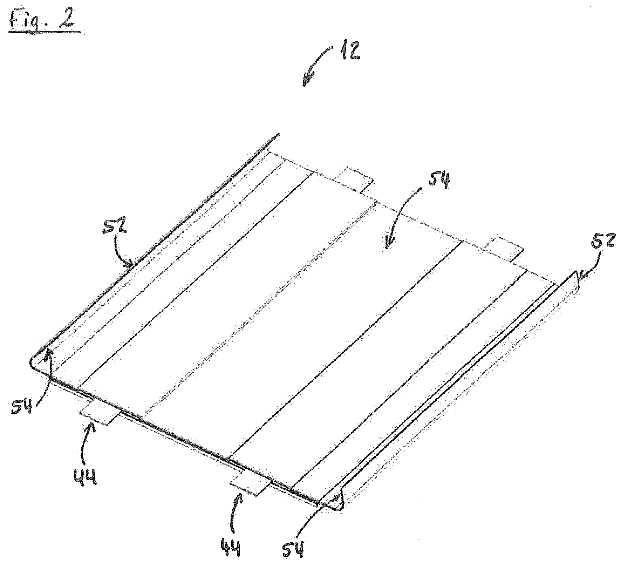

Fig. 2 zeigt einen kurzen Abschnitt der Unterkonstruktion 12 für den Strang 10. Die Unterkonstruktion 12 ist wesentlich länger, entsprechend der für den Strang der Scruton-Spirale notwendigen Länge, beispielsweise also 20 bis 50 Meter. Die Unterkonstruktion kann auch abschnittsweise mit entsprechend kürzeren Abschnitten aufgebaut sein, so dass beispielsweise zwei oder drei Längsabschnitte von je 10 bis 25 Metern Länge erst die notwendige Länge aufweisen. Die Unterkonstruktion besteht aus mehreren miteinander verbundenen, vorzugsweise vernähten, verschweißten und/oder verklebten Lagen. Eine Lage als Träger wird durch eine Textilbahn gebildet, beispielsweise eine LKW-Plane. Auf der Unterseite befindet sich die Auflagefläche, mit der die Unterkonstruktion auf der Oberfläche der Turmsektion aufliegt. Die Auflagefläche wird von einer Lage mit einem hohen Reibungskoeffizienten gebildet, beispielsweise einem Kautschuk.

Auf der Oberseite befinden sich Befestigungsmittel 54 zum Verbinden mit den Störkörpern 14, beispielsweise Klettband zum Herstellen einer Klettverbindung. An den Seiten der Unterkonstruktion 12 ist je ein Überstand 52 gezeigt, der hier in hochgeklappter Stellung dargestellt ist. An der dem Störkörper 14 zugewandten Seite ist der Überstand 52 ebenfalls mit Klettband 54 ausgestattet. Der Störkörper 14 wird also mit seiner Bodenfläche vollflächig über eine Klettverbindung mit der Unterkonstruktion 12 verbunden; durch die Klettbänder 54 an den Überständen 52 wird zudem eine weitere Klettverbindung mit den Wänden des Störkörpers 14 hergestellt. Dadurch wird die Festigkeit der Verbindung zwischen Unterkonstruktion 12 und Störkörper 14 noch einmal beträchtlich erhöht, so dass der Störkörper 14 durch Windeinwirkung nicht oder nur sehr schwer von der Unterkonstruktion 12 gelöst werden kann.

Zwei Gurte 44 sind in dafür vorgesehenen Kanälen in der Unterkonstruktion 12 geführt; die Gurte dienen zum Spannen der Unterkonstruktion 12 während der Montage an einer Turmsektion. Die Kanäle zum Führen der Gurte 44 weisen eine innere Oberfläche auf, die das Gleiten der Gurte 44 erleichtert, beispielsweise eine Beschichtung aus PTFE.

Fig. 3 zeigt einen Störkörper 14. Der Störkörper 14 besteht aus Textilbahnen, beispielsweise LKW-Plane, die miteinander verbunden, also vorzugsweise vernäht, verschweißt und/oder verklebt sind. Die Wände 48 des Störkörpers 14 sind versteift, zum Beispiel durch Platten aus Holz, Metall oder Kunststoff; eine zusätzliche Versteifung kann zwischen den beiden Wänden 48 angebracht sein, um einen bestimmten Winkel bzw. Abstand einzuhalten.

Die Wände 48 sind an einer Kante 50 miteinander verbunden; die Kante 50 definiert eine Längsrichtung des Störkörpers 14 und verläuft beim fertig montierten Strang 10 der Scruton-Spirale in Längsrichtung des Strangs 10. Die Kante 50 zeigt bei der fertig montierten Scruton-Spirale weg von der Turmsektion, an der Kante 50 bricht sich der Wind. Der Störkörper 14 weist eine zeltähnliche Form auf; in Längsrichtung gesehen hat er einen dreieckigen Querschnitt.

Der Störkörper 14 wird flach liegend bereitgestellt und muss vor der Montage einfach entlang vorbereiteter Kanten gefaltet werden. Der Störkörper ist im wesentlichen symmetrisch zu der Kante 50 aufgebaut und weist ein Bodenteil 56, eine versteifte Wand 48, eine zweite versteifte Wand 48 und ein zweites Bodenteil 56 auf. In der Figur 3 ist der Störkörper 14 fertig zum Montieren auf der Unterkonstruktion 12 dargestellt; zwischen den beiden Bodenteilen 56 ist die Stoßkante 58 erkennbar, an der die Enden der Planen mit ihren Enden zusammenstoßen. Der Abstand zwischen der Kante 50 und der Stoßkante 58, entsprechend der Höhe des Dreiecks, ist so groß, dass die Scruton-Spirale eine Höhe von mindestens einem Zwanzigstel, vorzugsweise einem Zehntel des Durchmessers der Turmsektion hat. Das entspricht beispielsweise etwa 40 cm bei einem Turmdurchmesser von 4 Metern.

Auf den Unterseiten der beiden Bodenteile 56 befinden sich vollflächig Befestigungsmittel 54 zum Herstellen einer Klettverbindung mit der Unterkonstruktion 12. Auf den Außenseiten der Wände 48 befinden sich Befestigungsmittel 54 zum Herstellen einer Klettverbindung mit den Überständen 52 der Unterkonstruktion 12 und weitere Befestigungsmittel 54 zum Herstellen einer Klettverbindung mit einem weiteren, in Längsrichtung benachbarten Störkörper 14.

Fig. 4 zeigt den Störkörper 14 aus einer anderen Perspektive. Zu erkennen sind wieder die versteiften Wände 48, die über die Kante 50 miteinander verbunden sind. In dieser Darstellung ist zu sehen, dass die Wände 48 über die Bodenteile 56 hinaus in Längsrichtung verlängert sind und Befestigungsmittel 54 zum Herstellen einer Klettverbindung mit einem weiteren, in Längsrichtung benachbarten Störkörper 14 aufweisen. In diesem verlängerten Abschnitt der Wände 48 kann zur bequemeren Handhabung auf die Versteifung verzichtet werden. Weiterhin sind die Bodenteile 56 mit vollflächigen Befestigungsmitteln 54 zum Verbinden mit der Unterkonstruktion 12 zu sehen.

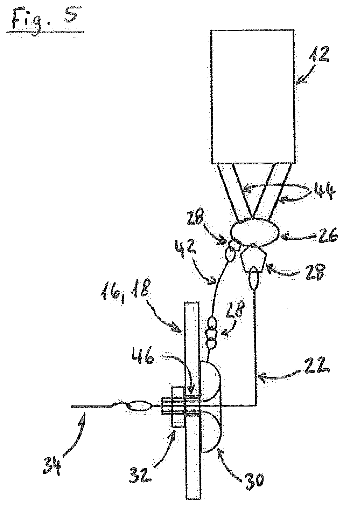

Fig. 5 zeigt schematisch das zweite Ende der Unterkonstruktion 12 des Stranges 10 der Scruton-Spirale und seine Montage; das zweite Ende ist das untere Ende, nachdem die Turmsektion 16 errichtet wurde. Aus dem Ende der Unterkonstruktion 12 ragen zwei Gurte 44, die zum Spannen der Unterkonstruktion dienen. Die Enden der Gurte 44 sind mit einem Ring oder Ovalglied 26 verbunden, insbesondere vernäht. Mittels eines Schäkels 28 wird das Seil 22 mit dem Ring 26 verbunden. In der Durchgangsbohrung 46 in der Turmwand 18 ist eine Buchse 30 angebracht und mit einer Mutter 32 gesichert. Die Buchse 30 weist eine Durchgangsbohrung auf, die auf der äußeren Seite mit einem Radius versehen ist. Durch die Durchgangsbohrung in der Buchse 30 wird das Seil 22 geführt, dabei sichert der Radius in der Durchgangsbohrung der Buchse 30, dass das Seil 22 mit diesem Radius geführt und nicht geknickt wird. Die Buchse 30 ist über eine Leine 42 und einen Schäkel 28 mit dem Ring 26 verbunden; dadurch wird bei der späteren Demontage die Buchse 30 gegen ein unkontrolliertes Herunterfallen gesichert. Im Inneren der Turmsektion 16 ist das Seil 22 mit einem Zugmittel 34, insbesondere einem Kettenzug, verbunden, um es bei der Montage zu spannen.

Die Anordnung am ersten Ende des Stranges 10 der Scruton-Spirale entspricht im wesentlichen der dargestellten Anordnung; das erste Ende ist das obere Ende, nachdem die Turmsektion 16 errichtet wurde. Jedoch ist dort zusätzlich ein Halteseil 24 mit dem Strang 10 verbunden, das nach Abschluss der Errichtung des Turms bzw. der Windenergieanlage die Demontage der Scruton-Spirale erleichtert.

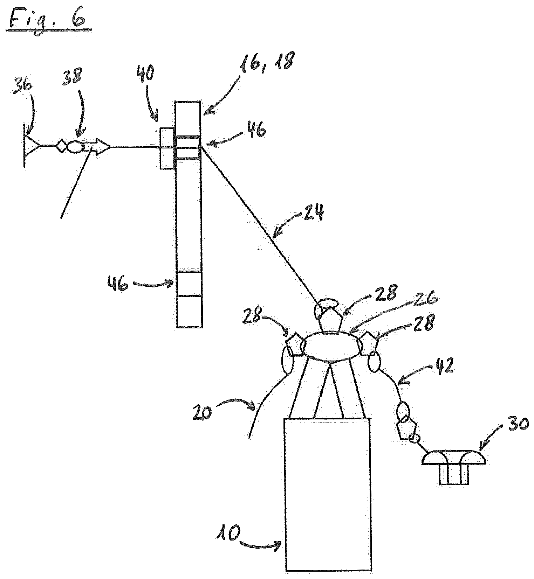

Fig. 6 zeigt schematisch die Demontage eines Stranges 10 der Scruton-Spirale. Zu erkennen ist das erste Ende des Stranges 10 der Scruton-Spirale. Der Strang 10 hängt an dem Halteseil 24, mit diesem verbunden über den Ring 26 und einen Schäkel 28. Das Seil 20, das durch die Buchse 30 durch die Durchgangsbohrung 46 in der Turmwand 18 geführt war, hängt frei herab; die Buchse 30 wurde von innen aus der Durchgangsbohrung 46 in der Turmwand 18 herausgeschoben und hängt nun, gesichert über die Leine 42, am Ring 26. Das Halteseil 24 ist durch ein Abseilgerät 38 geführt. Das Abseilgerät 38 begrenzt die Geschwindigkeit, mit der das Halteseil 24 ablaufen kann, so dass der Strang 10 der Scruton-Spirale kontrolliert außen am Turm auf den Boden herabgelassen werden kann. Das Abseilgerät 38 ist im Innern des Turms an einem Anschlagpunkt 36 gesichert. Wenn das Herablassen beendet ist, kann das Halteseil 24 gelöst werden und die Buchse 40 wird nach innen aus der Durchgangsbohrung 46 genommen. Die Durchgangsbohrungen 46 werden nach Abschluss der Arbeiten mit Stopfen verschlossen.

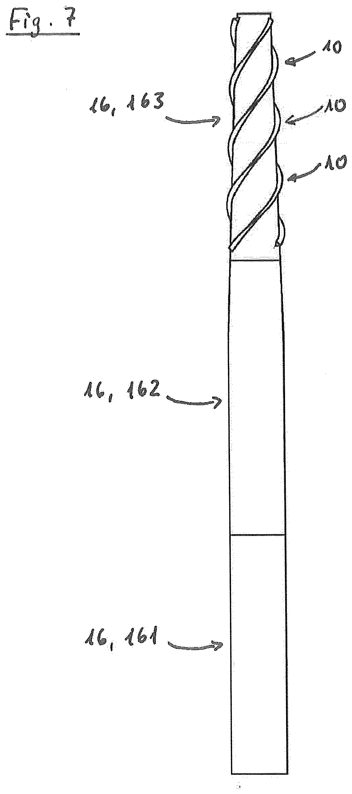

Fig. 7 zeigt einen aus mehreren, hier drei Turmsektionen 16 bestehenden Turm für eine Windenergieanlage. Die Turmsektionen 16 sind hier als Stahlrohrsektionen ausgebildet. Im Interesse der Übersicht sind das Fundament, die Gondel und der Rotor der Windenergieanlage nicht dargestellt. An der oberen Turmsektion 163 ist eine Scruton-Spirale zu erkennen, die aus drei Strängen 10 besteht, welche spiralförmig um die Turmsektion 163 gewunden sind. Die Scruton-Spirale soll gegen wirbelerregte Querschwingungen mit der ersten Eigenfrequenz des Turms wirksam sein und ist deshalb an der oberen Turmsektion 163 montiert. Dies ist bei einer Schwingung mit der ersten Eigenfrequenz der Bereich mit der größten Auslenkung. Um gegen Schwingungen mit der zweiten Eigenfrequenz des Turms wirksam zu sein, würde sie an der mittleren Turmsektion 162 montiert; bei einer Schwingung mit der zweiten Eigenfrequenz befindet sich der Bereich mit der größten Auslenkung etwa auf der halben Höhe des Turms.

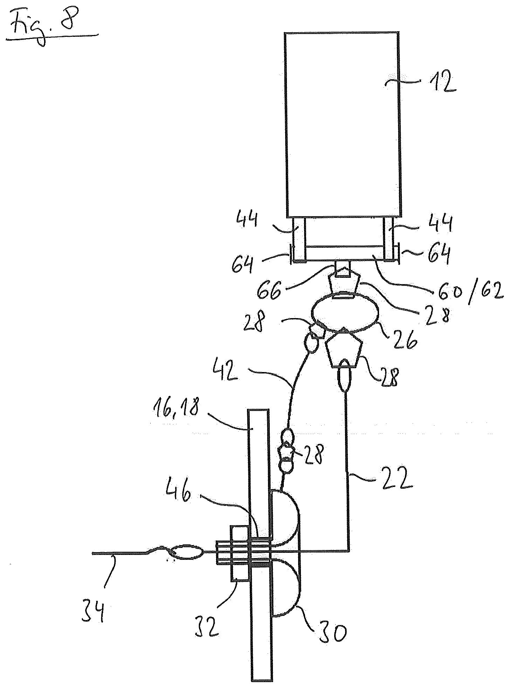

Figur 8 zeigt eine Darstellung zur Montage eines Strangs einer Scruton-Spirale, bei der die Unterkonstruktion 12 eine Traverse 60 aufweist. Im übrigen entspricht die Darstellung derjenigen der Fig. 5. Die übereinstimmenden Merkmale sind mit den gleich Bezugszeichen versehen und werden nicht nochmals erläutert. Abweichend von der Ausführung der Fig. 5 sind die beiden Gurte 44 nicht schräg zu dem Ring oder Ovalglied 26 zusammengeführt, sondern an der Traverse 60 in einem vorgegebenen Abstand voneinander befestigt. Die Traverse 60 weist ein Hohlprofil 62 aus Stahl auf und hat an beiden Enden jeweils eine Abschlussplatte 64, die ein seitliches Abrutschen der Gurte 44 verhindert. Alternativ oder zusätzlich kann die Traverse 60 mit Durchgangsöffnungen versehen sein, durch die die Gurte 44 hindurchgeführt sind. Etwa in der Mitte weist die Traverse 60 eine Befestigungseinrichtung in Form einer Öse 66 auf, an der das Spannelement mit dem zweiten Seil 22 befestigt ist, im Beispiel mittels einem Ring/Ovalglied 26 und zwei Schäkeln 28.

### Bezugszeichenliste

- 10: Strang der Scruton-Spirale
- 12: Unterkonstruktion
- 14: Störkörper
- 16: Turmsektion
- 18: Turmwand
- 20: erstes Seil
- 22: zweites Seil
- 24: drittes Seil, Halteseil
- 26: Ring, Ovalglied
- 28: Schäkel
- 30: Buchse
- 32: Mutter
- 34: Zugmittel, Kettenzug
- 36: Anschlagpunkt
- 38: Abseilgerät
- 40: Buchse
- 42: Leine
- 44: Gurt
- 46: Durchgangsbohrung
- 48: Wand
- 50: Kante
- 52: Überstand
- 54: Befestigungsmittel, Klettband
- 56: Bodenteil
- 58: Stoßkante
- 60: Traverse
- 62: Hohlprofil
- 64: Abschlussplatte
- 66: Öse
- 161: untere Turmsektion
- 162: mittlere Turmsektion
- 163: obere Turmsektion

## Patentansprüche

1. Strang (10) für eine Scruton-Spirale zur Verwendung an einem Turm für eine Windenergieanlage, aufweisend:
• wenigstens einen Störkörper (14) zum Beeinflussen einer Windströmung an dem Turm oder der Turmsektion (16), **dadurch gekennzeichnet, dass**
• der Strang (10) eine Unterkonstruktion (12) aufweist, die spiralförmig über eine Oberfläche einer Turmsektion (16) des Turms spannbar ist und eine Auflageseite mit einer Auflagefläche und eine der Auflageseite gegenüberliegende Außenseite aufweist,
• wobei der wenigstens eine Störkörper (14) mit der Außenseite der Unterkonstruktion (12) in Kontakt bringbar und mit der Unterkonstruktion (12) verbindbar ist.

2. Strang (10) für eine Scruton-Spirale nach Anspruch 1, **dadurch gekennzeichnet, dass** die Unterkonstruktion (12) ein Spannmittel umfasst, mit dem die Unterkonstruktion (12) entlang ihrer Längsrichtung auf Zug beanspruchbar ist, um die Auflagefläche gegen die Oberfläche der Turmsektion (16) zu pressen.

3. Strang (10) für eine Scruton-Spirale nach Anspruch 2, **dadurch gekennzeichnet, dass** die Unterkonstruktion (12) an mindestens einem Ende eine quer zu einer Längsrichtung der Unterkonstruktion (12) angeordnete Traverse (60) aufweist, an der das Spannmittel befestigt ist, wobei die Traverse (60) eine Befestigungseinrichtung zur Befestigung eines Spannelements aufweist.

4. Strang (10) für eine Scruton-Spirale nach Anspruch 3, **dadurch gekennzeichnet, dass** das Spannmittel zwei Gurte (44) oder zwei Seile aufweist, die in einem vorgegebenen Abstand voneinander an der Traverse (60) befestigt sind.

5. Strang (10) für eine Scruton-Spirale nach einem der Ansprüche 1 bis 4, **dadurch gekennzeichnet, dass** der Störkörper (14) zumindest zwei Wände (48) aufweist, die sich entlang einer Längsrichtung des Störkörpers (14) erstrecken, wobei der Störkörper (14) so mit der Unterkonstruktion (12) verbindbar ist, dass seine Längsrichtung im wesentlichen parallel zur Längsrichtung der Unterkonstruktion (12) ist.

6. Strang (10) für eine Scruton-Spirale nach einem der Ansprüche 1 bis 5, **dadurch gekennzeichnet, dass** der Strang (10) eine Mehrzahl von Störkörpern (14) aufweist, die zum Anordnen in Reihe entlang der Längsrichtung des Strangs (10) ausgebildet und miteinander verbindbar sind.

7. Strang (10) für eine Scruton-Spirale nach einem der Ansprüche 1 bis 6, **dadurch gekennzeichnet, dass** ein Störkörper (14) einen Deckel aufweist, mit dem ein Ende des Störkörpers (14) verschließbar ist.

8. Verfahren zum Montieren einer Scruton-Spirale an einer Turmsektion (16) für einen Turm für eine Windenergieanlage mit den Schritten:
• Bereitstellen einer Turmsektion (16),
• spiralförmiges Umwickeln der Turmsektion (16) mit wenigstens einer Unterkonstruktion (12) für einen Strang (10) einer Scruton-Spirale,
• Befestigen der Unterkonstruktion (12) an der Turmsektion (16) durch Einbringen einer Zugspannung in die Unterkonstruktion (12),
• Befestigen von wenigstens einem Störkörper (14) für die Scruton-Spirale an der Unterkonstruktion (12).

9. Verfahren nach Anspruch 8, **dadurch gekennzeichnet, dass** beim Befestigen der Unterkonstruktion (12) ein vorbestimmter Abstand zwischen je zwei Gängen der Scruton-Spirale eingehalten wird.

10. Verfahren nach Anspruch 8 oder 9, **dadurch gekennzeichnet, dass** die Turmsektion (16) eine Turmwand (18) mit einer Durchgangsbohrung (46) aufweist und dass zum Einbringen der Zugspannung ein Spannelement durch die Durchgangsbohrung (46) hindurchgeführt und gespannt wird.

11. Verfahren nach einem der Ansprüche 8 bis 10, **dadurch gekennzeichnet, dass** eine Mehrzahl von Störkörpern (14) an der Unterkonstruktion (12) befestigt wird, wobei benachbart angeordnete Störkörper (14) miteinander verbunden werden.

12. Verfahren nach einem der Ansprüche 8 bis 11, **dadurch gekennzeichnet, dass** die Scruton-Spirale mehrere, insbesondere drei Stränge (10) aufweist.

13. Verfahren nach einem der Ansprüche 8 bis 12, **dadurch gekennzeichnet, dass** die Turmsektion (16) vor dem spiralförmigen Umwickeln der Turmsektion (16) mit der wenigstens einen Unterkonstruktion (12) auf Rollböcken um ihre Längsachse drehbar gelagert wird.

14. Verfahren nach einem der Ansprüche 8 bis 13, **dadurch gekennzeichnet, dass** das Befestigen der Unterkonstruktion (12) an der Turmsektion (16) vor dem Transport der Turmsektion zu einem Errichtungsort des Turms und das Befestigen des wenigstens einen Störkörpers (14) an der Unterkonstruktion (12) am Errichtungsort des Turms erfolgt.

15. Verfahren zum Errichten einer Windenergieanlage mit den Schritten:
• Bereitstellen einer Mehrzahl von Turmsektionen (16),
• Montieren einer Scruton-Spirale an wenigstens einer Turmsektion (16) mit dem Verfahren nach einem der Ansprüche 8 bis 14,
• Errichten des Turmes aus den mehreren Turmsektionen (16),
• Montieren einer Gondel auf dem Turm und eines Rotors der Windenergieanlage.

## Claims

1. A strake (10) for a Scruton helix for use on a tower of a wind turbine, comprising:
• at least one interference member (14) for influencing a flow of wind on the tower or tower section (16), **characterized in that**
• the strake (10) comprises a substructure (12) that can be stretched in a helical manner over a surface of a tower section (16) and comprises a support side having a support surface and an outer side opposite the support side,
• wherein the at least one interference member (14) can be brought into contact with the outer side of the substructure (12) and can be connected to the substructure (12).

2. The strake (10) for a Scruton helix according to claim 1, **characterized in that** the substructure (12) comprises a stretching means, by means of which the substructure (12) can be tensioned in its longitudinal direction in order to press the support surface against the surface of the tower section (16).

3. The strake (10) for a Scruton helix according to claim 2, **characterized in that** the substructure (12) comprises a crossbeam (60) arranged transversely to a longitudinal direction of the substructure (12) on at least one end, to which crossbeam the stretching means is fastened, wherein the crossbeam (60) comprises a fastening apparatus for fastening a stretching element.

4. The strake (10) for a Scruton helix according to claim 3, **characterized in that** the stretching means comprises two straps (44) or two ropes that are fastened on the crossbeam (60) at a predefined distance from one another.

5. The strake (10) for a Scruton helix according to any one of claims 1 to 4, **characterized in that** the interference member (14) comprises at least two walls (48) that extend in a longitudinal direction of the interference member (14), wherein the interference member (14) can be connected to the substructure (12) such that its longitudinal direction is substantially parallel to the longitudinal direction of the substructure (12).

6. The strake (10) for a Scruton helix according to any one of claims 1 to 5, **characterized in that** the strake (10) comprises multiple interference members (14) that are designed to be arranged in a row in the longitudinal direction of the strake (10) and that can be interconnected.

7. The strake (10) for a Scruton helix according to any one of claims 1 to 6, **characterized in that** one interference member (14) comprises a cover, by means of which an end of the interference member (14) can be closed.

8. A method for installing a Scruton helix on a tower section (16) of a tower of a wind turbine, comprising the steps of:
• providing a tower section (16),
• winding at least one substructure (12) for a strake (10) of a Scruton helix in a helical manner around the tower section (16),
• fastening the substructure (12) to the tower section (16) by introducing tensile stress into the substructure (12),
• fastening at least one interference member (14) for the Scruton helix on the substructure (12).

9. The method according to claim 8, **characterized in that** a predetermined distance between each two turns of the Scruton helix is maintained during fastening of the substructure (12).

10. The method according to claim 8 or 9, **characterized in that** the tower section (16) comprises a tower wall (18) having a through-hole (46) and **in that** a stretching element is inserted through the through-hole (46) and stretched in order to introduce the tensile stress.

11. The method according to any one of claims 8 to 10, **characterized in that** multiple interference members (14) are fastened to the substructure (12), wherein adjacently arranged interference members (14) are interconnected.

12. The method according to any one of claims 8 to 11, **characterized in that** the Scruton helix comprises multiple, in particular three strakes (10).

13. The method according to any one of claims 8 to 12, **characterized in that** the tower section (16) is mounted on dollies such that it can rotate about its longitudinal axis before the at least one substructure (12) is wound in a helical manner around the tower section (16).

14. The method according to any one of claims 8 to 13, **characterized in that** the substructure (12) is fastened to the tower section (16) before the tower section is transported to a tower erection site, and the at least one interference member (14) is fastened to the substructure (12) at the tower erection site.

15. A method for erecting a wind turbine, comprising the steps of:
• providing multiple tower sections (16),
• installing a Scruton helix on at least one tower section (16) using the method according to any one of claims 8 to 14,
• constructing the tower from the multiple tower sections (16),
• installing a nacelle on the tower and a rotor of the wind turbine.

## Revendications

1. Filet (10) pour une hélice Scruton destinée à être utilisée sur une tour pour une éolienne, comprenant :
• au moins un corps perturbateur (14) destiné à influencer un flux de vent sur la tour ou la section de tour (16), **caractérisé en ce que**
• le filet (10) présente une construction de base (12) susceptible d'être tendue de manière hélicoïdale sur une surface d'une section de tour (16) de la tour et présentant un côté d'appui avec une surface d'appui et un côté extérieur opposé au côté d'appui,
• dans lequel l'au moins un corps perturbateur (14) peut être mis en contact avec le côté extérieur de la construction de base (12) et relié à la construction de base (12).

2. Filet (10) pour une hélice Scruton selon la revendication 1, **caractérisé en ce que** la construction de base (12) comporte un moyen de tension permettant de solliciter la construction de base (12) en traction le long de sa direction longitudinale, afin de presser la surface d'appui contre la surface de la section de tour (16).

3. Filet (10) pour une hélice Scruton selon la revendication 2, **caractérisé en ce qu'**à au moins une extrémité, la construction de base (12) présente une traverse (60) disposée transversalement à une direction longitudinale de la construction de base (12), sur laquelle est fixé le moyen de tension, la traverse (60) présentant un dispositif de fixation pour la fixation d'un élément de tension.

4. Filet (10) pour une hélice Scruton selon la revendication 3, **caractérisé en ce que** le moyen de tension présente deux courroies (44) ou deux câbles, lesquelles/lesquels sont fixé(e)s à une distance prédéfinie sur la traverse (60).

5. Filet (10) pour une hélice Scruton selon l'une des revendications 1 à 4, **caractérisé en ce que** le corps perturbateur (14) présente au moins deux parois (48) s'étendant le long d'une direction longitudinale du corps perturbateur (14), dans lequel le corps perturbateur (14) peut être relié de telle façon à la construction de base (12), que sa direction longitudinale est quasiment parallèle à la direction longitudinale de la construction de base (12).

6. Filet (10) pour une hélice Scruton selon l'une des revendications 1 à 5, **caractérisé en ce que** le filet (10) présente une pluralité de corps perturbateurs (14), lesquels sont conçus pour être agencés en rang le long de la direction longitudinale du filet (10) et peuvent être reliés entre eux.

7. Filet (10) pour une hélice Scruton selon l'une des revendications 1 à 6, **caractérisé en ce qu'**un corps perturbateur (14) présente un couvercle permettant de fermer une extrémité du corps perturbateur (14).

8. Procédé de montage d'une hélice Scruton sur une section de tour (16) pour une tour d'une éolienne, comprenant les étapes suivantes :
• mise à disposition d'une section de tour (16),
• enveloppement hélicoïdal de la section de tour (16) avec au moins une construction de base (12) pour un filet (10) d'une hélice Scruton,
• fixation de la construction de base (12) à la section de tour (16) par introduction d'une contrainte de tension dans la construction de base (12),
• fixation d'au moins un corps perturbateur (14) pour l'hélice Scruton à la construction de base (12).

9. Procédé selon la revendication 8, **caractérisé en ce que** lors de la fixation de la construction de base (12), une distance prédéfinie est maintenue respectivement entre deux spires de l'hélice Scruton.

10. Procédé selon la revendication 8 ou 9, **caractérisé en ce que** la section de tour (16) présente une paroi de tour (18) avec des alésages de passage (46) et **en ce que** pour l'introduction de la contrainte de tension, un élément de tension est inséré à travers l'alésage de passage (46) et tendu.

11. Procédé selon l'une des revendications 8 à 10, **caractérisé en ce qu'**une pluralité de corps perturbateurs (14) est fixée à la construction de base (12), dans lequel des corps perturbateurs (14) disposés de façon adjacente sont reliés entre eux.

12. Procédé selon l'une des revendications 8 à 11, **caractérisé en ce que** l'hélice Scruton présente plusieurs filets (10), en particulier trois.

13. Procédé selon l'une des revendications 8 à 12, **caractérisé en ce que** la section de tour (16) est montée sur des chariots de façon à pouvoir tourner autour de son axe longitudinal avant l'enveloppement hélicoïdal de la section de tour (16) avec l'au moins une construction de base (12).

14. Procédé selon l'une des revendications 8 à 13, **caractérisé en ce que** la fixation de la construction de base (12) à la section de tour (16) est réalisée avant le transport de la section de tour vers un lieu de construction de la tour et la fixation de l'au moins un corps perturbateur (14) à la construction de base (12) sur le lieu de construction de la tour.

15. Procédé de construction d'une éolienne, comprenant les étapes suivantes :
• mise à disposition d'une pluralité de sections de tour (16),
• montage d'une hélice Scruton sur au moins une section de tour (16) à l'aide du procédé selon l'une des revendications 8 à 14,
• construction de la tour à partir de la pluralité de sections de tour (16),
• montage d'une nacelle sur la tour et d'un rotor de l'éolienne.
